(19) Europäisches Patentamt
European Patent Office
Office européen des brevets

(11) Veröffentlichungsnummer: **0 005 510**
**B1**

(12) # EUROPÄISCHE PATENTSCHRIFT

(45) Veröffentlichungstag der Patentschrift: **18.11.81**

(51) Int. Cl.³: **C 08 J 5/18,** C 08 L 67/00

(21) Anmeldenummer: **79101428.5**

(22) Anmeldetag: **10.05.79**

(54) **Biaxial gestreckte Polyesterfolie und Verfahren zu ihrer Herstellung.**

(30) Priorität: **15.05.78 JP 56607/78**

(43) Veröffentlichungstag der Anmeldung: **28.11.79 Patentblatt 79/24**

(45) Bekanntmachung des Hinweises auf die Patenterteilung: **18.11.81 Patentblatt 81/46**

(84) Benannte Vertragsstaaten: **DE FR GB LU NL**

(56) Entgegenhaltungen:
**FR-A-2 194 741**
**US-A-3 255 099**
**US-A-3 652 714**

(73) Patentinhaber: **TORAY INDUSTRIES, INC., 2, Nihonbashi-Muromachi 2-chome Chuo-ku, Tokyo 103 (JP)**

(72) Erfinder: **Deguchi, Yukichi, 2-13-1 Sonoyama, Otsu-Shi Shiga-Ken (JP)**
Erfinder: **Ishitani, Akira, 2093-66 Bodaiji Kosei-Cho, Koga-gun Shiga-Ken (JP)**
Erfinder: **Tanaka, Chiaki, 7-2 Aza Shimojabuchi Safuri, Chita-shi Aichi-ken (JP)**

(74) Vertreter: **Wettlauffer, Willy, Dr. et al, Kalle Niederlassung der Hoechst AG Rheingaustrasse 190 Postfach 3540, D-6200 Wiesbaden 1 (DE)**

**EP 0 005 510 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Biaxial gestreckte Polyesterfolie und Verfahren zu ihrer Herstellung

Die vorliegende Erfindung betrifft eine biaxial gestreckte Polyesterfolie, an der Druckfarben, Magnetschichten u.dgl. ausgezeichnet haften und die sich darüber hinaus durch guten Schlupf und eine gute Gleitfähigkeit auszeichnet, wobei die guten Hafteigenschaften auch beim Lagern bei hohen Temperaturen und hoher Feuchtigkeit erhalten bleiben.

Biaxial gestrecke Polyesterfolien zeichnen sich durch ihre Transparenz, ihre mechanische Festigkeit und ihre Massbeständigkeit aus. Daher werden sie in weitem Umfange für Verpackungsfolien, Magnetbänder, graphische und ähnliche Zwecke verwendet.

Die Folien haben für diese Verwendungszwekke jedoch auch einige Nachteile. So müssen besondere speziell auf Polyesterfolie abgestimmte Druckfarben verwendet werden. Druckfarben für Zellglas haben zwar den Vorteil, dass sie ein schnelles Drucken ermöglichen, dass keine Lösungsmittel zurückbleiben und dass sie relativ billig sind, aber diese Druckfarben können für die üblichen Polyesterfolien nicht verwendet werden. Weiterhin haften verschiedene, für Magnetbänder, graphische Zwecke usw., verwendete Bindemittel nur schlecht auf Polyesterfolien.

Alle Massnahmen, die bisher vorgeschlagen wurden, um diese Nachteile zu verbessern, bringen wieder andere Probleme mit sich. Bis jetzt ist es nicht gelungen, eine Folie zu finden, die keine Nachteile aufweist und deren Eigenschaften besser sind als die der bisher üblichen Polyesterfolien.

Dafür seien die folgenden Beispiele genannt:

(1) Obwohl durch eine normale Corona-Behandlung in einer Luftatmosphäre (im folgenden ACD-Behandlung bezeichnet) zunächst eine gewisse Verbesserung der Haftung bewirkt wird, ist diese verbesserte Haftung praktisch wertlos, weil während des Alterns der Folie die Haftfähigkeit wieder stark abfällt. Ausserdem macht eine ACD-Behandlung die Folie klebrig und es gibt Gleitschwierigkeiten.

(2) Folien aus Polyestern, die mit Polyalkylenglykolen mischpolymerisiert oder auch nur gemischt und evtl. noch einer ACD-Behandlung unterworfen wurden, haben gute Hafteigenschaften, solange es trocken ist. Diese guten Hafteigenschaften gehen jedoch stark zurück, wenn die Folien bei hoher Temperatur und hoher Luftfeuchtigkeit gelagert werden oder wenn man sie kocht, um sie keimfrei zu machen, weil dann eine Phasenaufspaltung der Polyalkylenglykole eintritt.

(3) Eine Polyesterfolie, der hochschmelzende, in Polyestern lösliche Polyesteräther-Blockpolymerisate beigemischt wurden, um die Neigung zur Phasentrennung des Polyalkylenglykols zu unterdrücken, weist nur eine geringe Verbesserung der Hafteigenschaften auf. Zwar kann man durch eine zusätzliche ACD-Behandlung die Haftung zunächst etwas verbessern, jedoch verschlechtern sich die Hafteigenschaften schnell beim Altern der Folie, sogar unter normalen atmosphärischen Bedingungen. Ausserdem ist selbst für die Erzielung einer für praktische Zwekke nur ausreichenden anfänglichen Haftung eine hohe Konzentration des hochschmelzenden Polyesteräthers erforderlich. Derartig hohe Konzentrationen haben jedoch unerwünschte Folgen, wie z.B. eine Herabsetzung des Schmelzpunktes des Polymerisats durch einen Ester-Austausch mit dem Polyester während des Mischens oder der Extrusion, eine Steigerung des oligomeren Anteils und eine Zunahme der in der Technik als «Fischaugen» bezeichneten Materialfehler durch thermischen Abbau und ähnliches mehr. Mischungen mit hoher Konzentration führen auch dazu, dass bei der Herstellung der Folien die Walzen verschmutzt werden und dass die Folie abreisst.

Aufgabe der vorliegenden Erfindung ist es, eine biaxial gestreckte Polyesterfolie zu schaffen, die die oben genannten Nachteile nicht aufweist, gegenüber den üblichen in der Industrie verwendeten Polyesterfolien verbesserte Eigenschaften besitzt, und die zudem preisgünstig ist.

Umfangreiche Forschungen auf dem Gebiet der Polymermischungen und Oberflächenbeschaffenheit haben ergeben, dass dieses Ziel nicht durch irgendeine der bereits bekannten Techniken für sich erreicht werden kann. Erstens zeigt eine unbehandelte, orientierte Polyesterfolie, der man einen Polyesteräther beigemischt hat, nur eine sehr geringe Verbesserung der Hafteigenschaften, auch wenn die Zusammensetzung des Polyesteräthers derjenigen der in der vorliegenden Erfindung beschriebenen Polyesteräthers entspricht. Eine zusätzliche ACD-Behandlung bringt zwar eine gewisse Verbesserung der anfänglichen Haftung, jedoch verschlechtern sich die Hafteigenschaften stark beim Altern der Folie, sogar unter normalen atmosphärischen Bedingungen.

Wenn die in der vorliegenden Erfindung beschriebene dünne Schicht mit den Stickstoff-haltigen organischen Gruppen auf der Oberfläche konventioneller, biaxial gestreckter Polyesterfolien durch eine Corona-Behandlung in Stickstoff aufgebracht wird, so ist eine sehr hohe Konzentration der genannten organischen Gruppen erforderlich, um eine gewisse Verbesserung der Hafteigenschaften zu erzielen. Dabei verschlechtern sich nicht nur der Schlupf und die Gleitfähigkeit der Folie, sondern auch die Haftung lässt nach, wenn man die Folie nach ihrer Herstellung in Wasser taucht oder sie durch Kochen versucht, keimfrei zu machen.

Wenn man die Schicht mit den Stickstoff-haltigen organischen Gruppen auf der Oberfläche einer biaxial gestreckten Polyesterfolie aufbringt, die Polyalkylenglykole enthält oder mit einem konventionellen Polyesteräther gemischt ist, ist eine sehr hohe Konzentration der genannten Polyalkylenglykole oder der Polyesteräther erforderlich, um eine für praktische Zwecke ausreichende Verbesserung der Hafteigenschaften zu erzielen. In diesem Fall führt die hohe Konzentration des einpolymerisierten oder beigemischten Polymerisats zur Bildung von niedermolekularen Verbindungen und zu sogenannten «Fischaugen» durch thermischen Abbau. Folien dieses Typs sind nur für begrenzte Anwendungsgebiete geeignet und können nicht für so viele Zwecke verwendet werden wie Folien, die Bindemittel annehmen. So haften z.B. Druckfarben für Zellglas gut an solchen Folien, während die Haftung schlecht ist, wenn die Folien mit Polyester-Druckfarben bedruckt und dann zum Pasteurisieren gekocht werden.

Gelöst wird die bereits genannte Aufgabe durch eine biaxial gestreckte Polyesterfolie, die aus einem Polyester besteht, der mit 0.3 bis 10Gew.-% - bezogen auf das Gesamtgewicht der Mischung - eines Polyesteräthers gemischt ist und auf einer oder beiden Seiten eine Schicht mit Stickstoff-haltigen organischen Gruppen trägt, wobei diese Schicht nicht dicker als 10 nm ist und mehr als 1 Stickstoffatom auf 100 Kohlenstoffatome enthält (gemessen nach der ESCA-Methode) und die dadurch gekennzeichnet ist, dass der genannte Polyesteräther ein Blockmischpolymerisat mit einer Intrinsic-Viskosität von etwa 0,5 bis 5.0 ist und zu 15 bis 60 Gew.-% aus langkettigen Esterblöcken und zu 40 bis 85 Gew.-% aus kurzkettigen Esterblöcken besteht, wobei die langkettigen Esterblöcke aus wiederkehrenden Estereinheiten der unten angegebenen Formeln (a) und (b) bestehen und das Molekularverhältnis von (a) zu (b) zwischen 95:5 und 50:50 liegt, und die kurzkettigen Esterblöcke aus wiederkehrenden Estereinheiten der unten angegebenen Formeln (c) und (d) bestehen und das Molekularverhältnis von (c) zu (d) ebenfalls zwischen 95:5 und 50:50 liegt und wobei

(a) $$-O(PTME)O-\overset{O}{\overset{\|}{C}}-T-\overset{O}{\overset{\|}{C}}-$$

(b) $$-O(PTME)O-\overset{O}{\overset{\|}{C}}-I-\overset{O}{\overset{\|}{C}}-$$

(c) $$-OBO-\overset{O}{\overset{\|}{C}}-T-\overset{O}{\overset{\|}{C}}-$$

(d) $$-OBO-\overset{O}{\overset{\|}{C}}-I-\overset{O}{\overset{\|}{C}}-$$

bedeuten, und wobei in diesen Formeln

-O(PTME)O- den Rest eines Polytetramethylenätherglykols mit einem Molekulargewicht zwischen 600 und 3000,

$-\overset{O}{\overset{\|}{C}}-T-\overset{O}{\overset{\|}{C}}-$ einen Terephthalsäurerest,

$-\overset{O}{\overset{\|}{C}}-I-\overset{O}{\overset{\|}{C}}-$ einen Isophthalsäurerest, und

-OBO- einen 1,4-Butandiol-Rest bedeuten.

Folien gemäss der vorliegenden Erfindung haben die folgenden wesentlichen Vorteile:

1) Sie besitzen einen guten Schlupf und gute Gleitfähigkeit (niedriger Reibungskoeffizient),
2) ihre Haftung an den normalerweise für Zellglas verwendeten Druckfarben ist ausgezeichnet,
3) sie haften gut an verschiedenen für die Herstellung von Magnetschichten u.dgl. verwendeten Bindemitteln,
4) sie haften gut an aufgedampften Metallschichten,
5) die Hafteigenschaften der Folie sind sehr beständig, nicht nur bei der Lagerung unter normalen Temperatur- und Feuchtigkeitsbedingungen, sondern auch beim Lagern der Folie bei hohen Temperaturen und hoher Feuchtigkeit, beim Einweichen in Wasser und beim Kochen zum Zwekke des Pasteurisierens.

Der Polyester zur Herstellung der Folien gemäss der vorliegenden Erfindung besteht aus einem Rest aus zweibasischen Säuren, in dem mindestens 90 Molprozent aus Terephthalsäure besteht, und einem Glykolrest. Polyäthylenterephthalat (PET) oder Polyäthylenterephthalat-Mischpolymerisate sind bevorzugt.

Die Konzentration der Polyesteräther sollte zwischen 0.3 und 10 Gew.-%, vorzugsweise von 0.5 bis 7 Gew.-%, bezogen auf das Gesamtgewicht des Polymerisats, betragen.

Aus einem Polymerisat, das weniger als 0.3 Gew.-% des genannten Polyesteräthers enthält, lässt sich eine Folie mit verbesserten Hafteigenschaften nicht herstellen; auf der anderen Seite ergeben sich bei der Verwendung eines Polymerisats mit mehr als 10 Gew.-% dieses Polyesteräthers Probleme, wie z.B. eine Zunahme von Verbindungen mit niedrigen Molekulargewichten und die Zunahme der sogenannten «Fischaugen» durch thermischen Abbau der genannten Polyesteräther, oder eine Verschlechterung der Massbeständigkeit oder der Transparenz der Folie.

Obwohl der Polyesteräther mit dem Polyester vermischt wird, kann er auch aufgrund eines zwischenmolekularen Esteraustausches oder ähnlicher Vorgänge teilweise mit dem Polyester mischpolymerisiert sein.

Die Intrinsic-Viskosität der genannten Polyesteräther soll etwa zwischen 0.5 und 5.0, vorzugsweise zwischen 0.7 und 2.5, liegen. Wenn man Polyesteräther mit einer Viskosität ausserhalb der durch 0.5 und 5.0 angegebenen Grenzen

verwendet, ergibt sich das Problem, dass durch strukturelle Änderungen in der Dispersion die Hafteigenschaften verschlechtert werden.

Die langkettigen Esterblöcke gemäss der Erfindung bestehen im wesentlichen aus Polytetramethylenglykolresten mit einem Molekurlargewicht zwischen 600 und 3000, als der Polyätherglykol-Komponente, und Terephthalsäure- und Isophthalsäureresten, als der dibasischen Säure-Komponente. Andere Polyätherglykole, wie z.B. Polyäthylenglykol, Polypropylenglykol oder Polyäthylenoxid- und Polypropylenoxid-Verbindungen und/oder andere dibasische Säuren, wie z.B. Phthalsäure, Adipinsäure und Sebacinsäure können in einer Gesamtmenge von weniger als 10 Prozent vorhanden sein, bezogen auf das gesamte Molekül des genannten langkettigen Esterblocks.

Die kurzkettigen Esterblöcke gemäss der Erfindung bestehen im wesentlichen aus 1,4-Butandiol-Resten, als der Diol-Komponente, und aus Terephthalsäure- und Isophtthalsäureresten als der dibasischen Säure-Komponente. Andere Diole, wie z.B. Äthylenglykol, Propylenglykol, Diäthylenglykol, Trimethylenglykol oder Hexamethylenglykol und/oder andere dibasische Säuren können in einer Gesamtmenge von weniger als 10 Prozent vorhanden sein, bezogen auf das gesamte Molekül des genannten kurzkettigen Esterblocks.

Das Molverhältnis zwischen den Terephthalsäureresten und den Isophthalsäureresten, die die wesentlichen Säurebestandteile der langkettigen und der kurzkettigen Esterblöcke darstellen, liegt zwischen 95:5 und 50:50, vorzugsweise zwischen 80:20 und 50:50. Wenn man Polyesteräther verwendet, bei denen das Molverhältnis das obengenannte Molverhältnis übersteigt, ergibt sich eine nur unwesentliche Verbesserung der Hafteigenschaften der Folie. Infolgedessen müssen sehr hohe Konzentrationen beigemischt werden, so dass die oben geschilderten Nachteile eintreten. Andererseits besitzt ein Polyesteräther mit einem geringeren Molverhältnis als dem oben geschilderten nur eine geringe thermische Stabilität, so dass sich bei seiner Verwendung Schwierigkeiten durch thermische Zersetzung ergeben.

Das Gewichtsverhältnis zwischen langkettigen Esterblöcken und kurzkettigen Esterblöcken in dem Polyesteräther liegt zwischen 60:40 und 15:85, vorzugsweise zwischen 55:45 und 19:81. Bei einem Gewichtsverhältnis von mehr als 60:40, z.B. 70:30, weist der Polyesteräther nur eine geringe thermische Stabilität auf und die Folie ist nicht transparent genug. Wenn man auf der anderen Seite jedoch einen Polyesteräther mit einem Gewichtsverhältnis von weniger als 15:85, z.B. 10:90, verwendet, erhält man eine schlechte Haftung.

Das Molekulargewicht des gemäss der Erfindung verwendeten Tetramethylenglykols liegt zwischen 600 und 3000. Wenn man ein Tetramethylenglykol mit einem niedrigen Molekulargewicht verwendet, erhält man einen sehr viskosen Polyesteräther, was zu Schwierigkeiten beim Mischen und der Filmherstellung führt. Wenn man jedoch Tretramethylenglykol mit einem höheren Molekulargewicht verwendet, kann Phasentrennung der langkettigen Esterblöcke eintreten, durch welche die Transparenz des Films verschlechtert wird.

Als analytisches Verfahren zur Gewinnung von Informationen über die in der Oberflächenschicht einer Folienprobe enthaltenen Elemente und ihre chemische Verbindung untereinander wird das sogenannte «ESCA»-Verfahren benutzt, d.h. ein spektroskopisches Verfahren, bei dem die Photoelektronen durch weiche Röntgenstrahlen angeregt werden. Durch Bestrahlung mit weichen Röntgenstrahlen erhält man das Energiespektrum der Photoelektronen, die von den Atomen der Verbindungen in diesem Muster ausgesandt werden. Durch die schlechte Durchlässigkeit des Polymerisats für diese Photoelektronen ist es möglich, nach dieser Methode Informationen über die Oberflächenschicht bis zu einer Tiefe von 10 nm zu erhalten.

Stickstoffhaltige organische Gruppen gemäss der vorliegenden Erfindung sind organische Gruppen, welche Stickstoff enthalten, dessen Bindungsenergie, gemessen nach der ESCA-Methode, zwischen 398.1 und 401.1 eV im Spektrum der 1 S-Elektronenschale des Stickstoffs ($N_{1S}$Spektrum) beträgt, wobei man davon ausgeht, dass die Bindungsenergie des maximalen Scheitelwertes (Peak), die den einen Benzolring bildenden Kohlenstoffatomen entspricht, in dem $C_{1S}$Spektrum des Polyesters gemäss der Erfindung einen Wert von 285.0 eV hat. Beispiele für derartige organische Gruppen, im folgenden als «Stickstoff-haltige organische Gruppen» bezeichnet, sind Amidgruppen, Aminogruppen und Iminogruppen.

Die Konzentration der Stickstoff-haltigen organischen Gruppen gemäss der Erfindung wird ausgedrückt durch die Anzahl der Stickstoffatome auf 100 Kohlenstoffatome in den genannten organischen Gruppen des den Polyesteräther enthaltenden polymeren Polyesters, oder als das Verhältnis der genannten Stickstoffatome zu den genannten Kohlenstoffatomen (im folgenden als «N/C» bezeichnet.

N/C muss gemäss der Erfindung höher als 0.01 sein; vorzugsweise höher als 0.015.

Obwohl die Obergrenze für den Wert N/C je nach der Zusammensetzung und der Verwendung der Folie variiert, sollte sie bei etwa 0.1 liegen, vorzugsweise bei 0.06, im Hinblick auf die physikalischen und optischen Eigenschaften der Folie. Eine Folie mit einem zu hohen N/C-Wert hat schlechten Schlupf und eine schlechte Gleitfähigkeit oder ist trübe. Eine Folie mit einem N/C-Wert, der niedriger ist als oben angegeben, weist nicht die einzigartige Kombination mit dem gemischten Polyesteräther auf und hat schlechte Hafteigenschaften.

Mit Rücksicht auf die physikalischen Eigenschaften der Folie sollte die Schicht mit dem N/C-Wert von mehr als 0.01 weniger als 10 nm

dick sein, und es ist gut, wenn die Folie so dünn wie möglich ist. Wenn die Schicht dicker als 10 nm ist, treten Schwierigkeiten auf, weil die Schicht leicht beschädigt wird und dann einen schlechten Schlupf und eine schlechte Gleitfähigkeit und Transparenz besitzt und ausserdem eine thermische Verzerrung der Folie oder Falten auftreten können. Der N/C-Wert wird durch eine sorgfältige Messung nach der obengenannten ESCA-Methode bestimmt.

Die Stickstoff-haltigen organischen Gruppen gemäss der Erfindung sind direkt an die Molekülkette des Polyesters und Polyesteräthers gebunden, aus denen die Grundfolie besteht. Diese Bindung unterscheidet sich deutlich von dem Gefüge, das entsteht, wenn man Stickstoff-haltige Monomere durch Pfropfpolymerisation oder Additionspolymerisation auf der Oberfläche einer Grundfolie verankert. Ausserdem sind die Folien gemäss der vorliegenden Erfindung durch ihre guten Hafteigenschaften und Gleiteigenschaften den nach der konventionellen Methode hergestellten Folien überlegen und haben nicht den Nachteil, dass die Monomerschicht die guten Eigenschaften einer nach der konventionellen Methode hergestellten Folie zunichte macht.

Im folgenden wird das Verfahren zur Herstellung der erfindungsgemässen Folie an einem Beispiel dargestellt:

Zunächst stellt man den Polyesteräther gemäss der Erfindung her durch Kondensationspolymerisation von Dimethylterephthalat, Dimethylisophthalat, Polytetramethylenoxidglykol, und 1,4-Butandiol als Ausgangsmaterialien und Titantetrabutoxid als Katalysator.

Die so erhaltenen Polyesteräther-Kügelchen werden in einer Menge von 0.3 bis 10%, berechnet auf das Gesamtgewicht des Polymerisats, mit Polyester-Kügelchen in einem Mischer vermischt. Die Polymermischung wird getrocknet und dann durch eine Düse extrudiert, und abgekühlt, wobei eine amorphe Folie gebildet wird. Diese Vorfolie wird mittels Walzen (roll stretching) oder nach dem Stenterverfahren biaxial gestreckt, wodurch eine biaxial orientierte Polyester-Grundfolie entsteht.

Anschliessend wird diese Grundfolie einer Stickstoff-Coronaentladungs-Behandlung (im folgenden als «NCD-Behandlung» bezeichnet) unterworfen. Die NCD-Behandlung besteht aus einer Corona-Behandlung, die in einer im wesentlichen aus Stickstoff bestehenden Atmosphäre bei niedrigem Druck, normalem Druck oder erhöhtem Druck stattfindet, wobei die Sauerstoffkonzentration weniger als 0.1 Volumenprozent ausmachen muss. Bei der NCD-Behandlung muss eine elektrische Energie zwischen 300 und 6000 Joule pro $m^2$ Folie aufgewendet werden, wenn man eine Polyesterfolie mit guten Eigenschaften erzielen will.

Es sei darauf hingewiesen, dass die Anwesenheit von mehr als 0.1 Volumenprozent Sauerstoff in der Atmosphäre während der NCD-Behandlung die Bildung von Sauerstoff-haltigen organischen Gruppen beschleunigt und die Bildung von Stickstoff-haltigen organischen Gruppen erschwert, so dass die erfindungsgemässe Folie nicht erhalten wird.

Die so hergestellte Polyesterfolie gemäss der Erfindung kann in weitem Umfange als Verpackungsfolie, als Grundfolie für Magnetbänder und für ähnliche Zwecke Verwendung finden, wo Bedruckbarkeit, Metallisierbarkeit, guter Schlupf und gute Gleiteigenschaften erforderlich sind, zusätzlich zu den ausgezeichneten Eigenschaften der normalen biaxial gestreckten Polyesterfolien.

Im folgenden wird die Erfindung anhand einiger Methoden zur Folienauswertung und einiger Beispiele näher erläutert.

(1) Beurteilung der Bedruckbarkeit:

Eine für das Bedrucken von Zellglas bestimmte Druckfarbe («CC-ST», weiss, der Fa. Tokyo Ink Co.) oder eine für das Bedrucken von Polyesterfolien bestimmte Druckfarbe («LP-RET», gelb, der Firma Tokyo Ink Co.) wird mit Hilfe einer Rakel oder mit Tiefdruckwalzen so auf die Oberfläche des Films aufgebracht, dass eine Druckfarbenschicht entsprechend 3 $g/m^2$ entsteht. Die so bedruckte Folie wird anschliessend eine Minute lang bei 60 °C getrocknet.

Sofort nach dem Bedrucken und Trocknen oder nach einer Lagerung unter wechselnden Bedingungen wird eine Schäl- und Abhebeprüfung durchgeführt, wozu man einen Klebestreifen auf Zellglasbasis verwendet.

Für die Druckfarbenhaftung wurden die folgenden Beurteilungsgrade benutzt:

5: Ausgezeichnete Haftung. Von der aufgedruckten Druckfarbe blättert nichts ab.

4: Gute Haftung. Mehr als 90% der Farbschicht verbleibt auf der Folie.

3: Ausreichende Haftung. Zwischen 75% und 90% der Farbschicht verbleibt auf der Folie.

2: Mangelhafte Haftung. Zwischen 50% und 75% der Farbschicht verbleibt auf der Folie.

1: Schlechte Haftung. Weniger als 50% der Farbschicht verbleibt auf der Folie.

(2) Polyäthylen-Kaschiertest:

Nachdem man die Folie wie unter (1) beschrieben bedruckt hat, trägt man mit Hilfe von Rakeln oder Tiefdruckwalzen auf die Farbschicht einen Urethan-Grundlack («Nippollan» 3016 und «Coronate» L der Firma Nippon Polyurethan Co.) in der Weise auf, dass nach dem Trocknen eine Grundierungsschicht mit einer Dicke von etwa 0.8 $g/m^2$ entsteht. Anschliessend wird die Schicht 30 Minuten lang bei 80 °C getrocknet.

Auf die so vorbeschichtete Folie wird anschliessend mit einem Extruder eine Schicht aus Polyäthylen («Sumikathene» L 705 der Firma Sumitomo Chem. Co.) so aufgebracht, dass die aufkaschierte Schicht 50 μm dick ist. Die Verbundfestigkeit der aufkaschierten Schicht wird einer «Instron»-Zerreissmaschine mit Hilfe des sogenannten «T-Peel»-Tests gemesssen. Wenn nötig, wird die Messung vorgenommen, nachdem man die kaschierte Folie zum Pasteurisieren in Wasser gekocht hat.

(3) Messung nach dem ESCA-Verfahren:

Die Spektren der 1S-Elektronenschale des Stickstoffs ($N_{1S}$) und der 1S-Elektronenschale des Kohlenstoffs ($C_{1S}$) der Folienoberfläche werden mit Hilfe eines ESCA-Spektrometers (Modell ES-200 der Firma Kokusai Electric Co.) gemessen. Daraus wird das Verhältnis der integrierten Intensität des Scheitelwertes entsprechend der Bindungsenergie der Stickstoff-haltigen organischen Gruppen im $N_{1S}$-Spektrum zum Scheitelwert des $C_{1S}$-Spektrums berechnet. Aus dem oben ermittelten integrierten Intensitätsverhältnis errechnet man dann das Verhältnis von Stickstoff-Atomen zu Kohlenstoff-Atomen (N/C).

(4) Elektronenmikroskopische Untersuchung eines Folienquerschnitts:

Zunächst wird die Folie mit Osmiumsäure angefärbt und dann untersucht man einen Folienquerschnitt unter einem Durchstrahlungs-Elektronenmikroskop (Modell HU-12, der Firma Hitachi). Durch die Anfärbung mit Osmiumsäure wird die Schicht mit Stickstoff-haltigen organischen Gruppen gemäss der Erfindung angefärbt und unter dem Elektronenmikroskop entsteht durch das reduzierte Osmium ein Bildkontrast. Auf diese Weise kann die Tiefe der Schicht mit den Stickstoff-haltigen organischen Gruppen gemessen werden.

Beispiel 1

a) Polymerisation des Polyesteräthers

(1) Polyesteräther gemäss der Erfindung, im folgenden als «Polyesteräther A» bezeichnet:

In einen Autoklaven mit einem spiralförmigen Rührarm füllte man die folgenden Materialien:

95 Gewichtsteile Dimethylterephthalat
41 Gewichtsteile Dimethylisophthalat
140 Gewichtsteile Polytetramethylenoxidglykol mit einem durchschnittlichen Molekulargewicht von etwa 1000
135 Gewichtsteile 1,4-Butandiol

Nachdem man 0.1 Gewichtsteile Titantetrabutoxid als Katalysator zugegeben hatte, erhitzte man die Mischung zwei Stunden lang auf 210°C und destillierte gleichzeitig 95% der theoretisch entstehenden Mengen an Äthanol ab.

Man setzte dem so erhaltenen Produkt ein Antioxidationsmittel zu («Irganox» 1010 der Firma Ciba-Geigy). Anschliessend erhöhte man die Temperatur auf 245°C und verringerte den Druck in dem Autoklaven langsam, d.h. innerhalb von 50 Minuten, auf 0.27 mbar. Unter diesen Bedingungen dauerte die Polymerisation 2 Stunden.

Der so erhaltene Polyesteräther hatte einen Schmelzpunkt von 146°C und eine Intrinsic-Viskosität von 1.15.

(2) Vergleichs-Polyesteräther, im folgenden als «Polyesteräther B» bezeichnet:

194 Gewichtsteile Dimethylterephthalt
61 Gewichtsteile Polytetramethylenoxidglykol mit einem durchschnittlichen Molekulargewicht von etwa 1000, und
135 Gewichtsteile 1,4-Butandiol
wurden in einen Autoklaven gefüllt und unter den unter (1) genannten Bedingungen miteinander polymerisiert.

Das so erhaltene Polymerisat hatte einen Schmelzpunkt von 215°C und eine Intrinsic-Viskosität von 0.95.

b) Herstelung der Folie

Die Polyesteräther A und B wurden jeweils mit Polyäthylenterephthalat-Kügelchen (PET) mit einer Intrinsic-Viskosität von 0.618 gemischt, wobei der Gehalt an Polyesteräther jeweils 1.0% des Gewichts der betreffenden Mischung ausmachte.

Die beiden Mischungen (A und B) wurden dann bei einer Temperatur von 285°C durch eine Düse auf eine Giesstrommel extrudiert, die man auf 50°C hielt. Es wurden 140 µm dicke, unorientierte Folien erhalten.

Diese Folien wurden dann kontinuierlich verstreckt, und zwar zunächst bei 85°C in der Längsrichtung auf das 3,3-fache ihrer ursprünglichen Länge zwischen Walzen, und dann bei 90°C in der Querrichtung auf das 3,5-fache ihrer ursprünglichen Breite in einem Rahmen. Anschliessend wurden beide Folien einer Temperatur von 270°C ausgesetzt. Es entstanden 12 µm dicke, biaxial verstreckte Polyestergrundfolien (Folien A und B).

Zu Vergleichszwecken wurde in der gleichen Weise eine biaxial gestreckte Folie aus üblichem Polyäthylenterephthalat hergestellt (Folie C).

c) Behandlung der Folienoberfläche

Die Folien A, B und C wurden dann unter den in Tabelle 1 angegebenen Bedingungen einer NCD-Behandlung und einer ACD-Behandlung unterworfen.

Tabelle 1

| | NCD-Behandlung | ACD-Behandlung |
|---|---|---|
| Apparatur | Vielzweck-Oberflächenbehandlungsapparat (Modell FE-X2 der Toray Ind.) | wie bei der NCD-Behandlung |
| Behandlungsatmosphäre | Stickstoff (Konzentration des Restsauerstoffs 0.01 Vol.%) | Luft |

Tabelle 1 (Fortsetzung)

| | NCD-Behandlung | ACD-Behandlung |
|---|---|---|
| zugeführtes Stickstoffgas | hochreines Stickstoffgas (Reinheitsgrad über 99,999 Vol.%) Feuchtigkeit: unter 0.03% relat. Feuchtigkeit | — |
| Generator | Hochfrequenzgenerator (Typ HF-401 der Fa. Kasuga Electric Co.) | wie bei der NCD-Behandlung |
| angewandte elektrische Energie | 1800 Joule/$m^2$ | wie bei der NCD-Behandlung |

d) Auswertung

Die so erhaltenen Folien wurden zuerst direkt nach der Herstellung beurteilt. Die Resultate sind in der Tabelle 2 zusammengestellt.

Ausserdem wurden die Folien noch einmal beurteilt, nachdem man sie 6 Monate lang bei Zimmertemperatur und normaler Feuchtigkeit gelagert hatte. Diese Ergebnisse sind in Tabelle 3 zusammengestellt.

Die Folie gemäss der Erfindung war sehr gut zu bedrucken und besass eine hohe Verbundfestigkeit. Die Verbundfestigkeit verringerte sich kaum, wenn man die Folie bei hoher Temperatur und relativ hoher Feuchtigkeit lagerte oder sie sogar durch Kochen keimfrei machte.

Auch nachdem man die Folie nach ihrer Herstellung 6 Monate lang gelagert hatte, zeigte sie im wesentlichen die gleichen Eigenschaften.

Tabelle 2

| Bezeichnung der Folie | Polyesteräther-Zusatz | Oberflächenbehandlung | N/C Verhältnis (gem.n.d. ESCA-Meth.) | Tiefe der behandelten Schicht (nm) | Bedruckbarkeit | | Verbundfestigkeit (g/cm) | | | Bemerkungen |
|---|---|---|---|---|---|---|---|---|---|---|
| | | | | | direkt nach der Bedrukkung | nach der Lagerung unter Bedingung b) | nach der Lagerung unter Bedingung a) | nach der Lagerung unter Bedingung b) | nach dem Kochen | |
| A-1 | A | NCD | 0.030 | weniger als 10 | 5 | 5 | 270 | 250 | 195 | Folie gemäss der Erfindung |
| B-1 | B | NCD | 0.031 | weniger als 10 | 4 | 4 | 130 | 110 | 90 | Folie entspricht nicht der Erfind. |
| C-1 | kein Zusatz | NCD | 0.033 | weniger als 10 | 3 | 3 | 90 | 81 | 70 | Folie entspricht nicht der Erfind. |
| A-2 | A | ACD | 0 | nicht gemessen | 3 | 1 | 150 | 95 | 75 | Folie entspricht nicht der Erfind. |
| B-2 | B | ACD | 0 | nicht gemessen | 2 | 1 | 90 | 54 | 40 | Folie entspricht nicht der Erfind. |
| C-2 | kein Zusatz | ACD | 0 | nicht gemessen | 2 | 1 | 64 | 39 | 31 | Folie entspricht nicht der Erfind. |
| A-3 | A | unbehandelt | 0 | nicht gemessen | 1 | 1 | 91 | 73 | 60 | Folie entspricht nicht der Erfind. |
| B-3 | B | unbehandelt | 0 | nicht gemessen | 1 | 1 | 62 | 50 | 40 | Folie entspricht nicht der Erfind. |
| C-3 | kein Zusatz | unbehandelt | 0 | nicht gemessen | 1 | 1 | 48 | 40 | 35 | Folie entspricht nicht der Erfind. |

Lagerungsbedingungen: a) 48 Stunden bei Zimmertemperatur und normaler Feuchtigkeit
b) 48 Stunden bei 50 °C und 85% relativer Feuchtigkeit

Tabelle 3

| Bezeichnung der Folie | Polyesteräther-Zusatz | Oberflächenbehandlung | N/C Verhältnis (gem.n.d. ESCA-Meth.) | Tiefe der behandelten Schicht (nm) | Bedruckbarkeit direkt nach der Bedrukkung | nach der Lagerung unter Bedingung b) | Verbundfestigkeit (g/cm) nach der Lagerung unter Bedingung a) | nach der Lagerung unter Bedingung b) | nach dem Kochen | Bemerkungen |
|---|---|---|---|---|---|---|---|---|---|---|
| A-1 | A | NCD | 0.027 | weniger als 10 | 5 | 5 | 245 | 226 | 175 | Folie gemäss der Erfindung |
| B-1 | B | NCD | 0.027 | weniger als 10 | 3 | 3 | 110 | 94 | 76 | Folie entspricht nicht der Erfind. |
| C-1 | kein Zusatz | NCD | 0.026 | weniger als 10 | 2 | 2 | 77 | 68 | 60 | Folie entspricht nicht der Erfind. |
| A-2 | A | ACD | 0 | nicht gemessen | 2 | 1 | 75 | 48 | 39 | Folie entspricht nicht der Erfind. |
| B-2 | B | ACD | 0 | nicht gemessen | 1 | 1 | 50 | 39 | 36 | Folie entspricht nicht der Erfind. |
| C-2 | kein Zusatz | ACD | 0 | nicht gemessen | 1 | 1 | 40 | 34 | 30 | Folie entspricht nicht der Erfind. |
| A-3 | A | unbehandelt | 0 | nicht gemessen | 1 | 1 | 90 | 73 | 60 | Folie entspricht nicht der Erfind. |
| B-3 | B | unbehandelt | 0 | nicht gemessen | 1 | 1 | 63 | 49 | 42 | Folie entspricht nicht der Erfind. |
| C-3 | kein Zusatz | unbehandelt | 0 | nicht gemessen | 1 | 1 | 47 | 40 | 35 | Folie entspricht nicht der Erfind. |

Lagerungsbedingungen: a) 48 Stunden bei Zimertemperatur und normaler Feuchtigkeit
b) 48 Stunden bei 50 °C und 85% relativer Feuchtigkeit

Beispiel 2

a) Polymerisation des Polyesteräthers

Die Polyesteräther D, E, F, G und H wurden jeweils in der gleichen Weise wie der Polyesteräther A in Beispiel 1 durch Polymerisation aus Dimethylterephthalat, Dimethylisophthalat, Polytetramethylenoxidglykol mit einem durchschnittlichen Molekulargewicht von etwa 1000, und 1,4-Butandiol hergestellt. Die Zusammensetzung der verschiedenen Polyesteräther geht aus Tabelle 4 hervor.

Tabelle 4

| Bezeichnung des Polyesteräthers | Molverhältnis zw. Terephthalsäure u. Isophthalsäure in der Säurekomponente | Gewichtsverhältnis zw. lang- u. kurzkettigen Esterblöcken | Bemerkungen |
|---|---|---|---|
| D | 70:30 | 20:80 | Folie gem. d. Erfindung |
| E | 55:45 | 20:80 | Folie gem. d. Erfindung |
| F | 75:25 | 40:60 | Folie gem. d. Erfindung |
| G | 97:3 | 50:50 | Folie entspricht nicht der Erfindung |
| H | 70:30 | 10:90 | |

b) Herstellung der Folie

Die so hergestellten Polyesteräther D, E, F, G und H wurden jeweils im Gewichtsverhältnis 2:98 mit Polyäthylenterephthalat-Kügelchen mit einer Intrinsic-Viskosität von 0.618 vermischt.

Die so entstandenen Mischungen wurden dann jeweils in der gleichen Weise extrudiert und gestreckt wie in Beispiel 1. Es entstanden 5 verschiedene biaxial gestreckte Grundfolien D–H.

c) Behandlung der Folienoberfläche

Die Grundfolien D–H wurden jeweils wie in Beispiel 1 beschrieben einer NCD-Behandlung unterworfen.

d) Auswertung

Die Folien D–H wurden zweimal beurteilt, einmal direkt nach ihrer Herstellung und dann nachdem sie 6 Monate lang bei Zimmertemperatur und normaler Feuchtigkeit gelagert worden waren.

Die Resultate sind in der Tabelle 5 zusammengestellt.

Aus den Resultaten geht hervor, dass zusätzlich zu den Stickstoff-haltigen organischen Gruppen noch ein Polyesteräther der angegebenen Zusammensetzung erforderlich ist, um Folien gemäss der Erfindung herzustellen.

Beispiel 3

a) Polymerisation des Polyesteräthers

Es wurde der Polyesteräther A gemäss Beispiel 1 verwendet.

b) Herstellung der Folie

In der in Beispiel 1 beschriebenen Weise wurden 5 verschiedene, biaxial gestreckte Grundfolien (Folien A-4 bis A-8) hergestellt, die jeweils verschiedene Mengen des Polyesteräthers A enthielten.

c) Behandlung der Folienoberfläche

Jede der Grundfolien A-4 bis A-8 wurde der in Beispiel 1 angegebenen NCD-Behandlung unterworfen.

d) Auswertung

Die Folien wurden direkt nach ihrer Herstellung ausgewertet. Die Resultate sind in der Tabelle 6 zusammengestellt.

Tabelle 5

| Bezeichnung der Folie | Polyesteräther-Zusatz | Oberflächenbehandlung | N/C Verhältnis (gem.n.d. ESCA-Meth.) | Tiefe der behandelten Schicht (nm) | Auswertung direkt nach der Herstellung | | Auswertung nach 6monat. Lagerung | | Bemerkungen |
|---|---|---|---|---|---|---|---|---|---|
| | | | | | Bedruckbarkeit *1 | Verbundfestigkeit *2 (g/cm) | Bedruckbarkeit *1 | Verbundfestigkeit *2 (g/cm) | |
| D-1 | D | NCD | 0.030 | unter 10 | 5 | 205 | 5 | 185 | Folie gemäss der Erfind. |
| D-1 | E | NCD | 0.029 | unter 10 | 5 | 220 | 5 | 200 | Folie gemäss der Erfind. |
| F-1 | F | NCD | 0.031 | unter 10 | 5 | 210 | 5 | 195 | Folie gemäss der Erfind. |
| G-1 | G | NCD | 0.033 | unter 10 | 4 | 120 | 3 | 95 | Folie entspricht nicht der Erfindung |
| H-1 | H | NCD | 0.031 | unter 10 | 4 | 90 | 3 | 77 | Folie entspricht nicht der Erfindung |
| H-1 | H | NCD | 0.031 | unter 10 | 4 | 90 | 3 | 77 | Folie entspricht nicht der Erfindung |

*1: Gemessen nach 48stündiger Lagerung bei 50 °C und einer relativen Feuchtigkeit von 85%

*2: Gemessen nach dem Kochen

Tabelle 6

| Bezeichnung der Folie | Gehalt an Polyesteräther | N/C Verhältnis (gem.n.d. ESCA-Meth.) | Tiefe der behandelten Schicht (nm) | Bedruckbarkeit *1 | Verbund festigkeit *2 (g/cm) | Zusätzliche Angaben | Bemerkungen |
|---|---|---|---|---|---|---|---|
| A-4 | 0.1 | 0.033 | weniger als 10 | 2 | 75 | | Folie entspricht nicht der Erfind. |
| A-5 | 0.5 | 0.030 | weniger als 10 | 5 | 170 | | Folie gemäss der Erfindung |
| A-6 | 2.0 | 0.029 | weniger als 10 | 5 | 205 | | Folie gemäss der Erfindung |
| A-7 | 5.0 | 0.030 | weniger als 10 | 5 | 220 | | Folie gemäss der Erfindung |
| A-8 | 12.0 | –*3 | –*3 | –*3 | –*3 | Während ihrer Herstellung reisst die Folie oft ab. Zu viele Fehler in der Folie. Walzen werden stark verschmutzt. | Folie entspricht nicht der Erfind. |

*1: Gemessen nach 48stündiger Lagerung bei 50 °C und einer relativen Feuchtigkeit von 85%
*2: Gemessen nach dem Kochen
*3: Nicht gemessen

Beispiel 4

a) Herstellung der Folie

Nach dem in Beispiel 1 beschriebenen Verfahren stellte man eine biaxial gestreckte Polyesterfolie her, welche 4.0 Gew.-% an Polyesteräther A enthielt.

b) Behandlung der Folienoberfläche

Man stellte 4 verschiedene Folien (A-9 bis A-12) mit unterschiedlichem Stickstoff/Kohlenstoffverhältnis her, indem man sie einer NCD-Behandlung unterwarf, die – abgesehen von der angewendeten elektrischen Energie – der NCD-Behandlung in Beispiel 1 entsprach.

c) Auswertung

Die Folien wurden sofort nach ihrer Herstellung beurteilt. Die Resultate sind in der Tabelle 7 zusammengestellt.

Eine Folie, bei der das Verhältnis zwischen Stickstoff und Kohlenstoff (gemessen nach der ESCA-Methode) unter 0.01 liegt, ist für die Zwecke der vorliegenden Anmeldung ungeeignet.

Tabelle 7

| Bezeichnung der Folie | Elektr. Energie bei der NCD-Behandlung (Joule/m$^2$) | N/C Verhältnis (gem.n.d. ESCA-Meth.) | Tiefe der behandelten Schicht (nm) | Bedruckbarkeit *1 | Verbundfestigkeit *2 (g/cm) | Bemerkungen |
|---|---|---|---|---|---|---|
| A-9 | 2.400 | 0.040 | unter 10 | 5 | 200 | Folie gemäss der Erfindung |
| A-10 | 1.200 | 0.025 | unter 10 | 5 | 205 | Folie gemäss der Erfindung |
| A-11 | 600 | 0.020 | unter 10 | 5 | 195 | Folie gemäss der Erfindung |
| A-12 | 200 | 0.005 | unter 10 | 3 | 120 | Folie entspricht nicht der Erfindung |

*1: Gemessen nach 48stündiger Lagerung bei 50 °C und einer relativen Feuchtigkeit von 85%
*2: Gemessen nach dem Kochen

**Patentansprüche**

1. Biaxial gestreckte Polyesterfolie, die aus einem Polyester besteht, der 0.3 bis 10.0 Gew.-% – bezogen auf das Gesamtgewicht der Mischung – eines Polyesteräthers enthält, und die auf einer oder beiden Seiten eine Schicht mit Stickstoffhaltigen organischen Gruppen trägt, wobei diese Schicht nicht dicker als 10 nm ist und mehr als 1 Stickstoffatom auf 100 Kohlenstoffatome enthält (gemessen nach der ESCA-Methode), dadurch gekennzeichnet, dass der Polyesteräther ein

Block-Mischpolymerisat mit einere Intrinsic-Viskosität von 0.5 bis 5.0 ist und zu 15 bis 60 Gewichtsprozent aus langkettigen Esterblöcken besteht, wobei die langkettigen Esterblöcke aus wiederkehrenden Estereinheiten der unten angegebenen Formeln (a) und (b) bestehen und das Molekularverhältnis von (a) zu (b) zwischen 95:5 und 50:50 liegt, und die kurzkettigen Esterblöcke aus wiederkehrenden Estereinheiten der unten angegebenen Formeln (c) und (d) bestehen und das Molekularverhältnis von (c) zu (d) ebenfalls zwischen 95:5 und 50:50 liegt und wobei

(a) $-O(PTME)O-\overset{O}{\overset{\|}{C}}-T-\overset{O}{\overset{\|}{C}}-$

(b) $-O(PTME)O-\overset{O}{\overset{\|}{C}}-I-\overset{O}{\overset{\|}{C}}-$

(c) $-OBO-\overset{O}{\overset{\|}{C}}-T-\overset{O}{\overset{\|}{C}}-$

(d) $-OBO-\overset{O}{\overset{\|}{C}}-I-\overset{O}{\overset{\|}{C}}-$

bedeuten und wobei in diesen Formeln

-O(PTME)O- den Rest eines Polytetramethylenätherglykols mit einem Molekulargewicht zwischen 600 und 3000

$-\overset{O}{\overset{\|}{C}}-T-\overset{O}{\overset{\|}{C}}-$ einen Terephthalsäurerest

$-\overset{O}{\overset{\|}{C}}-I-\overset{O}{\overset{\|}{C}}-$ einen Isophthalsäurerest, und

-OBO- einen 1,4-Butandiol-Rest

bedeuten.

2. Folie nach Anspruch 1, dadurch gekennzeichnet, dass die Reste

-O(PTME)O-

$-\overset{O}{\overset{\|}{C}}-T-\overset{O}{\overset{\|}{C}}-$ und

$-\overset{O}{\overset{\|}{C}}-I-\overset{O}{\overset{\|}{C}}-$

durch weniger als 10% der Gesamtmenge, bezogen auf das gesamte Molekül des langkettigen Esterblocks, durch Reste anderer Polyätherglykole und/oder anderer dibasischer Säuren ersetzt sind.

3. Folie nach einem der Ansprüche 1 oder 2, dadurch gekennzeichnet, dass die Reste

-O-B-O

$-\overset{O}{\overset{\|}{C}}-T-\overset{O}{\overset{\|}{C}}-$ und

$-\overset{O}{\overset{\|}{C}}-I-\overset{O}{\overset{\|}{C}}-$

durch weniger als 10% der Gesamtmenge, bezogen auf das gesamte Molekül des kurzkettigen Esterblocks, durch Reste anderer Glykole und/oder anderer dibaischen Säuren ersetzt sind.

4. Verfahren zur Herstellung einer Folie nach einem der Ansprüche 1 bis 3, wobei man einen Polyester mit 0.3 bis 10.0 Gew.-% – bezogen auf das Gesamtgewicht der Mischung – eines Polyesteräthers mischt, das Polymergemisch in bekannter Weise extrudiert, abkühlt und die Vorfolie biaxial streckt, dadurch gekennzeichnet, dass man einen Polyesteräther wie in den Ansprüchen 1 bis 3 definiert einmischt, und man die fertige Folie in einer Stickstoffatmosphäre mit einem Sauerstoffgehalt unter 0.1 Volumenprozent einer Coronabehandlung unterwirft.

## Claims

1. Biaxially stretched polyester film which comprises a polyester containing from 0.3 to 10.0 percent by weight, based on the total weight of the blend, of a polyester ether and which is coated on one or both sides with a layer having nitrogen-containing organic groups, which layer has a thickness not exceeding 10 nm and contains more than 1 nitrogen atom per 100 carbon atoms (as measured by the ESCA method), wherein the polyester ether is a block-copolymer which has an intrinsic viscosity ranging from 0.5 to 5 and comprises from 15 to 60 percent by weight of long-chain ester blocks and from 40 to 85 percent by weight of short-chain ester blocks, the long-chain ester blocks consisting of recurring ester units of the below-specified formulae (a) and (b) in which the molar ratio of (a):(b) ranges between 95:5 and 50:50, and the short-chain ester blocks consisting of recurring ester units of the below-specified formulae (c) and (d) in which the molar ratio of (c):(d) also ranges between 95:5 and 50:50 and wherein

(a) $-O(PTME)O-\overset{O}{\overset{\|}{C}}-T-\overset{O}{\overset{\|}{C}}-$

(b) $-O(PTME)O-\overset{O}{\overset{\|}{C}}-I-\overset{O}{\overset{\|}{C}}-$

(c) $-OBO-\overset{O}{\overset{\|}{C}}-T-\overset{O}{\overset{\|}{C}}-$

(d) $-OBO-\overset{\overset{O}{\|}}{C}-I-\overset{\overset{O}{\|}}{C}-$

in which formulae

$-O(PTME)O-$ is a residue of a polytetramethylene ether glycol which has a molecular weight ranging between 600 and 3000,

$-\overset{\overset{O}{\|}}{C}-T-\overset{\overset{O}{\|}}{C}-$ is a residue of terephthalic acid,

$-\overset{\overset{O}{\|}}{C}-I-\overset{\overset{O}{\|}}{C}-$ is a residue of isophthalic acid and

$-OBO-$ is a residue of 1,4-butanediol

2. A film as claimed in claim 1, wherein the residues

$-O(PTME)O-$

$-\overset{\overset{O}{\|}}{C}-T-\overset{\overset{O}{\|}}{C}-$ and

$-\overset{\overset{O}{\|}}{C}-I-\overset{\overset{O}{\|}}{C}-$

are substituted by less than 10 percent of the total amount, based on the total molecule of the long-chain ester block, by residues of other polyether glycols and/or other dibasic acids.

3. A film as claimed in any of claims 1 or 2, wherein the residues

$-O-B-O$

$-\overset{\overset{O}{\|}}{C}-T-\overset{\overset{O}{\|}}{C}-$ and

$-\overset{\overset{O}{\|}}{C}-I-\overset{\overset{O}{\|}}{C}-$

are substituted by less than 10 percent of the total amount, based on the total molecule of the short-chain ester block, by residues of other glycols and/or other dibasic acids.

4. Process for the production of a film as claimed in any of claims 1 to 3, by blending a polyester with 0.3 to 10.0 percent by weight, based on the total weight of the blend, of a polyester ether, extruding the polymer blend in known manner, cooling and biaxially stretching the pre-film,
wherein a polyester ether as defined in claims 1 to 3 is admixed and the finished film is subjected to a corona treatment in a nitrogen atmosphere which has an oxygen content of less than 0.1 percent by volume.

**Revendications**

1. Feuille de polyester étirée biaxialement, formée d'un polyester contenant 0,3 à 10% en poids - relativement au poids total du mélange - d'un polyester-éther et portant sur une face ou sur les deux faces une couche contenant des groupes organiques azotés, cette couche n'étant pas plus épaisse que 10 nm et contenant plus de 1 atome d'azote sur 100 atomes de carbone (mesurés selon la méthode ESCA), feuille caractérisée en ce que le polyester-éther mentionnée est un produit de copolymérisation séquencé ayant une viscosité intrinsèque d'environ 0,5 à 5,0 et comprend 15 à 60% en poids de séquences ester à longue chaîne et 40 à 85% en poids de séquences ester à chaîne courte, les séquences ester à longue chaîne étant formées d'unités ester récurrentes des formules (a) et (b) indiquées ci-dessous et le rapport moléculaire de (a) à (b) étant compris entre 95:5 et 50:50, les séquences ester à chaîne courte étant formées d'unités ester récurrentes des formules (c) et (d) indiquées ci-dessous et le rapport moléculaire de (c) à (d) étant également compris entre 95:5 et 50:50,

(a) signifiant $-O(PTME)O-\overset{\overset{O}{\|}}{C}-T-\overset{\overset{O}{\|}}{C}-$

(b) signifiant $-O(PTME)O-\overset{\overset{O}{\|}}{C}-I-\overset{\overset{O}{\|}}{C}-$

(c) signifiant $-OBO-\overset{\overset{O}{\|}}{C}-T-\overset{\overset{O}{\|}}{C}-$

(d) signifiant $-OBO-\overset{\overset{O}{\|}}{C}-I-\overset{\overset{O}{\|}}{C}-$

et, dans ces formules,

$-O(PTME)O-$ représentant le radical d'un polytétraméthylène-éther-glycol ayant un poids moléculaire de 600 à 3000,

$-\overset{\overset{O}{\|}}{C}-T-\overset{\overset{O}{\|}}{C}-$ un radical d'acide téréphtalique,

$-\overset{\overset{O}{\|}}{C}-I-\overset{\overset{O}{\|}}{C}-$ un radical d'acide isophtalique et

$-OBO-$ un radical de 1,4-butanediol.

2. Feuille selon la revendication 1, caractérisée en ce que les radicaux

$-O(PTME)O-$

$-\overset{\overset{O}{\|}}{C}-T-\overset{\overset{O}{\|}}{C}-$ et

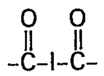

sont remplacés, à raison de moins de 10% de la quantité total relativement à l'ensemble de la molécule de la séquence ester à chaîne longue, par des radicaux d'autres polyéthers-glycols et/ou d'autres diacides.

3. Feuille selon l'une des revendications 1 et 2, caractérisée en ce que les radicaux

-O-B-O-

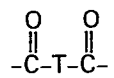

et

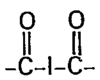

sont remplacés, à raison de moins de 10% de la quantité totale relativement à l'ensemble de la molécule de la séquence ester à chaîne courte, par des radicaux d'autres glycols et/ou d'autres diacides.

4. Procédé de fabrication d'une feuille selon l'une des revendications 1 à 3, dans lequel on mélange un polyester à 0,3 à 10,0% en poids – relativement au poids total du mélange – d'un polyester-éther, on extrude le mélange de polymères de façon connue, on le refroidit et on étire biaxialement la préfeuille, caractérisé en ce que l'on incorpore un polyester-éther tel que défini aux revendications 1 à 3 et que l'on soumet la feuille finie à un traitement sous effluve dans une atmosphère d'azote ayant une teneur en oxygène inférieure à 0,1% en volume.